(19) Europäisches Patentamt

European Patent Office

Office européen des brevets

(11) **EP 1 035 155 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(51) Int Cl.[7]: **C08J 3/215**, C08L 21/00, B01F 5/04

(21) Anmeldenummer: **00104112.8**

(22) Anmeldetag: **29.02.2000**

(54) **Verfahren zur kontinuierlichen Herstellung von Kautschukpulvern und Vorrichtung zur Durchführung des Verfahrens**

Process for the continuous production of rubber powder and apparatus for carrying out the process

Procédé pour la fabrication en continu de caoutchouc pulvérulent et dispositif pour la mise en oeuvre de ce procédé

(84) Benannte Vertragsstaaten:
**AT BE CH CY DE DK ES FI FR GB GR IE IT LI LU MC NL PT SE**

(30) Priorität: **11.03.1999 EP 99104822**

(43) Veröffentlichungstag der Anmeldung:
**13.09.2000 Patentblatt 2000/37**

(73) Patentinhaber: **PKU Pulverkautschuk Union GmbH**
**45764 Marl (DE)**

(72) Erfinder:
• **Smigerski, Hans-Jürgen Dr.**
**45770 Marl (DE)**
• **Ernst, Uwe**
**45768 Marl (DE)**

(56) Entgegenhaltungen:
**DE-A- 3 723 214          US-A- 2 769 795**
**US-A- 4 340 347**

**Beschreibung**

Die Erfindung betrifft ein Verfahren zur kontinuierlichen Herstellung von füllstoffhaltigem Kautschukpulver, bei dem man eine Füllstoff- und Kautschuksuspension in wäßriger Phase mischt, durch ein Rohr leitet, in dem Rohr zumindest mit einem Koagulationsmittel versetzt und füllstoffhaltige Kautschukpartikel ausfällt.

Die Herstellung von Kautschukmischungen erfolgt nach dem Stand der Technik aus ballenförmig vorliegendem Rohkautschuk unter hohem Aufwand an Zeit, Energie und Personal. Die Zerkleinerung der Ballen und die Mischung mit Zusatzstoffen ist aufwendig und kostenintensiv. Dagegen bietet der Einsatz rieselfähiger Kautschukpulver die Möglichkeit, Kautschukmischungen einfach und schnell herzustellen und zu verarbeiten.

Aus US 4 265 939 ist ein Verfahren zur kontinuierlichen Herstellung von Kautschukpulvern bekannt, das jedoch nicht das Vermischen mit einem Koagulationsmittel in einem Rohr mit verhältnismäßig engem Querschnitt beschreibt. Eine effektive Vermischung der beiden Komponenten soll aufgrund der turbulenten Strömung in dem engen Rohr stattfinden. Anschließend wird das koagulierte Kautschukmaterial in ein Rohr mit erweitertem Querschnitt geleitet. In diesem Rohr wird der flüssigen Mischung ein Polymer als Beschichtungsmittel zugeführt. Dieses bekannte Verfahren läßt im Hinblick auf eine effektive Vermischung der Komponenten zu wünschen übrig. Außerdem finden insbesondere in dem Rohrabschnitt mit verengtem Querschnitt störende Ablagerungen, beziehungsweise Wandanbackungen statt, die die Strömungsverhältnisse verändern. Daher sind die Eigenschaften der nach diesem Verfahren hergestellten Produkte nicht reproduzierbar und weisen diese Produkte aufgrund der wechselnden Strömungsverhältnisse bei der Herstellung auch nachteilhafte nicht erwünschte Eigenschaften auf. Daß im Rahmen eines Verfahrens zur kontinuierlichen Herstellung von füllstoffhaltigem Kautschukpulver das Kautschukmaterial mit dem Füllstoff kontinuierlich in einem Rohr vermischt werden kann, ist grundsätzlich auch aus DE 37 23 213 C2 und DE 37 23 214 C2 bekannt. Eine konkrete Lehre zur Durchführung des Verfahrens ist beiden Dokumenten jedoch nicht entnehmbar.

Fernerhin sind Verfahren zur Herstellung von füllstoffhaltigem Kautschukpulver bekannt, die absatzweise betrieben werden, beziehungsweise diskontinuierlich durchgeführt werden. Hier wird in der Regel eine füllstoffhaltige Suspension mit einem geeigneten Latex in Gegenwart eines Fällungsmittels zusammengeführt und man läßt die Mischung dann in einem Behälter ausreagieren. Diese bekannten Verfahren erfordern in nachteilhafter Weise einen relativ hohen apparativen und zeitlichen Aufwand. Ein solches diskontinuierliches Verfahren wird beispielsweise in DE 28 22 148 C2 beschrieben.

Demgegenüber liegt der Erfindung die Aufgabe zugrunde, ein Verfahren bereitzustellen, um ein füllstoffhaltiges Kautschukpulver mit reproduzierbaren Eigenschaften problemlos und mit geringem Aufwand herzustellen und die vorstehend geschilderten Nachteile zu vermeiden.

Gegenstand der Erfindung ist ein Verfahren zur kontinuierlichen Herstellung von füllstoffhaltigem Kautschukpulver, bei dem

a) Füllstoffdispersionen und Kautschuksuspensionen gemischt werden

b) die flüssige Mischung durch ein Rohr geleitet, zumindest mit einem Koagulationsmittel versetzt und das füllstoffhaltige Kautschukpulver ausgefällt wird,

c) die flüssige Mischung durch ein Rohr mit mindestens einer Drosselstelle mit variablem Drosselquerschnitt geleitet wird,

d) und der Drosselquerschnitt mit der Maßgabe eingestellt wird, daß der mit der Drosselstelle erzielte Druckabfall in der flüssigen Mischung größer als 0,5 bar beträgt.

Es liegt im Rahmen der Erfindung, daß die flüssige Mischung zumindest ein flüssiges Medium, insbesondere Wasser, enthält. Vorzugsweise wird eine Suspension, zweckmässigerweise eine wäßrige Suspension des Füllstoffes eingesetzt, beziehungsweise zu dem Kautschukmaterial gegeben. Das Kautschukmaterial wird zweckmässigerweise als Kautschuklatex und/oder als Kautschuklösung und/oder als wäßrige Emulsion einer Kautschuklösung eingesetzt. Bei dem Kautschukmaterial mag es sich um einen synthetischen und/oder natürlichen Kautschuk handeln. Nach einer bevorzugten Ausführungsform der Erfindung wird als Kautschuklatex ein Styrol-Butadien-Copolymerisat verwendet. Es liegt im Rahmen der Erfindung, einen oder mehrere Füllstoffe einzusetzen. Als Füllstoff wird beispielsweise Ruß verwendet. Es liegt im Rahmen der Erfindung, dem Kautschukmaterial eine wäßrige Suspension von Ruß zuzufügen, insbesondere eine 2 bis 7 Gew.-%ige wäßrige Suspension von Russ.

Der Korngrößenbereich der erfindungsgemäß erhaltenen Kautschukpulver liegt im allgemeinen zwischen 0,05 und 10 mm, im besonderen zwischen 0,5 und 2 mm.

Die pulverförmigen Kautschuke enthalten von 20 bis 250 phr, insbesondere von 50 bis 100 phr Füllstoff (phr: parts per hundred parts of rubber), der gegebenenfalls zum Teil oder insgesamt unter Verwendung der im Kautschuksektor bekannten Organo-siliziumverbindungen gemäß den Formeln (I), (II) oder (III) vor dem erfindungsgemäßen Verfahren an der Oberfläche modifiziert wurde.
Als Kautschuktypen geeignet haben sich folgende Spezies gezeigt, einzeln oder im Gemisch miteinander:

Naturkautschuk, Emulsions-SBR mit einem Styrolanteil von 10 bis 50 %, Butyl-Acrylnitril-Kautschuk. Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Neben den genannten Kautschuken kommen folgende Elastomere, einzeln oder im Gemisch, in Frage:

Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenenfalls auch chemisch modifizierter Naturkautschuk, wie zum Beispiel epoxidierte Typen.

Als Füllstoffe werden im allgemeinen die aus der Kautschukverarbeitung bekannten Ruße und weißen Füllstoffe synthetischer Natur, wie z. B. gefällte Kieselsäuren oder natürliche Füllstoffe, wie z. B. Kieselkreide, Clays usw. zusätzlich verwendet.

Besonders geeignet sind Ruße, wie sie allgemein in der Kautschukverarbeitung eingesetzt werden.

Dazu gehören Furnaceruße, Gas- und Flammruße mit einer Jodadsorptionszahl 5 bis 1000 $m^2$/g, einer CTAB-Zahl von 15 bis 600 $m^2$/g, einer DBP-Adsorption von 30 bis 400 ml/100 g und einer DBP-Zahl von 50 bis 370 ml/100 g in einer Menge von 5 bis 250 Teilen, insbesondere 20 bis 150 Teilen, auf 100 Teile Kautschuk, insbesondere 40 bis 100 Teile.

Geeignet sind ebenso die aus dem Kautschuksektor bekannten silikatischen Füllstoffe synthetischer oder natürlicher Herkunft, insbesondere gefällte Kieselsäuren.

Diese besitzen im allgemeinen eine nach der bekannten BET-Methode bestimmte $N_2$-Oberfläche von 35 bis 700 $m^2$/g, eine CTAB-Oberfläche von 30 bis 500 $m^2$/g, eine DBP-Zahl von 150 bis 400 ml/100g.

Das erfindungsgemäße Produkt enthält diese Kieselsäuren in einer Menge von 5 bis 250 Teilen, insbesondere 20 bis 100 Teilen, bezogen auf 100 Teile Kautschuk.

Handelt es sich um weiße Naturfüllstoffe, wie Clays oder Kieselkreiden mit einer $N_2$-Oberfläche von 2 bis 35 $m^2$/g setzt man diesen in einer Menge von 5 bis 350 Teilen, bezogen auf 100 Teile Kautschuk, ein.

Geeignet sind auch Pulver, die einen oder mehrere der oben genannten Füllstoffe im Gemisch enthalten.

Neben den nicht modifizierten Füllstoffen der genannten Art werden gegebenenfalls zusätzlich modifizierte Füllstoffe bei der Herstellung der hier beanspruchten Kautschukpulver eingesetzt.

Der Anteil an nicht modifizierten Füllstoffen hängt von der speziell herzustellenden Mischung ab.

In jedem Fall beläuft sich die Gesamtmenge an Füllstoff auf 20 bis 250 phr.

Diese besteht im allgemeinen zu 100 %, insbesondere zu 30 bis 100 %, bevorzugt 60 bis 100 %, aus den nicht modifizierten Füllstoffen: Kieselsäure und/oder Ruß. Für die Modifizierung der Oberflächen setzt man im allgemeinen Organosiliziumverbindungen der allgemeinen Formeln

$$[R^1_n\text{-}(RO)_{3-n} \, Si\text{-}(Alk)_m \, \text{-}(Ar)_p]_q \, [B] \qquad (I)$$

$$R^1_n \, (RO)_{3-n} \, Si\text{-} \, (Alk)$$

$$(II),$$

oder

$$R^1_n \, (RO)_{3-n} Si\text{-} \, (Alkenyl)$$

$$(III)$$

ein,
in denen bedeuten

| | |
|---|---|
| B: | -SCN, -SH, -Cl, -NH$_2$ (wenn q = 1) oder -S$_x$- (wenn q = 2) |
| R und R$^1$: | eine Alkylgruppe mit 1 bis 4 Kohlenstoffatomen, verzweigt oder nicht verzweigt, den Phenylrest, wobei alle Reste R und R$^1$ jeweils die gleiche oder eine verschiedene Bedeutung haben können, bevorzugt eine Alkylgruppe, |
| R: | eine C$_1$-C$_4$-Alkyl, C$_1$-C$_4$-Alkoxygruppe, verzweigt oder nicht verzweigt, |
| n: | 0; 1 oder 2, |
| Alk: | einen zweiwertigen geraden oder verzweigten Kohlenwasserstoffrest mit 1 bis 6 Kohlenstoffatomen, |
| m: | 0 oder 1 |
| Ar: | einen Arylenrest mit 6 bis 12 C-Atomen |
| p: | 0 oder 1 mit der Maßgabe, daß p und m nicht gleichzeitig 0 bedeuten, |
| x: | eine Zahl von 2 bis 8, |
| Alkyl: | einen einwertigen geraden oder verzweig- |

ten ungesättigten Kohlenwasserstoffrest mit 1 bis 20 Kohlenstoffatomen, bevorzugt 2 bis 8 Kohlenstoffatomen,

Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen.

Modifizierte Füllstoffe, die erfindungsgemäß eingesetzt werden, werden z. B. in der EP-B 0442 143, der EP-B 0177 674 und insbesondere in Form von Granulaten in der EP-A 0795 579 (weiße Füllstoffe), beziehungsweise in der EP-B 0519 188 (Ruß) beschrieben.

Als geeignet haben sich für die Vormodifizierung oder den Zusatz zur Füllstoffsuspension insbesondere die Bis(alkoxysilylalkyl)-oligosulfane der Typen Bis(trialkoxysilylpropyl)-tetrasulfan und -disulfan erwiesen.

Die aus den genannten Anmeldungen, beziehungsweise Patenten bekannten modifizierten Füllstoffe, beziehungsweise die dort genannten Organosiliziumverbindungen werden ausdrücklich als Bestandteil der beanspruchten Zusammensetzungen mit in die vorliegende Anmeldung einbezogen.

Die erfindungsgemäßen Kautschukpulver enthalten neben den bereits genannten Füllstoffen insbesondere bekannte Verarbeitungs- oder Vulkanisationshilfsmittel wie Zinkoxid, Zinkstearat, Stearinsäure, Polyalkohole, Polyamine, Harze, Wachse, Weichmacheröle, Alterungsschutzmittel gegen Wärme, Licht oder Sauerstoff und Ozon, Verstärkerharze, Flammschutzmittel wie z. B. Al(OH)$_3$ und Mg(OH)$_2$, Pigmente, verschiedene Vernetzungschemikalien und Beschleuniger und gegebenenfalls Schwefel in den gummitechnisch üblichen Konzentrationen, bevorzugt Schwefel in mit oberflächenaktiven Substanzen versetzten Modifikationen, wie er kommerziell verfügbar ist.

Die Bestimmung der Korngröße erfolgt aus der Füllstoffsuspension.

In einer besonders bevorzugten Form des erfindungsgemäßen Verfahrens liegen sämtliche der eingesetzten Feststoffe vor dem Ausfällen der Kautschukpartikel aus der Suspension in einer Korngröße <50 μm, bevorzugt <10 μm vor. Gegebenenfalls kann es aufgrund der Herstellung zu Agglomeratbildung kommen, die jedoch das Verarbeitungsverhalten nicht negativ beeinflussen.

Gegenstand der Erfindung ist auch ein Verfahren zur Herstellung feinteiliger, füllstoffhaltiger Kautschukpulver durch Ausfällen aus wasserhaltigen Mischungen in einem mit Drosselklappen an geeigneter Stelle versehenem Rohr, die gegebenenfalls mit Organosiliziumverbindungen modifizierten, feinteilige(n) Füllstoff(e) (Ruß und/oder silikatischer Füllstoff), wasserlösliche Salze eines Metalls der Gruppen IIa, IIb, IIIa und VIII des periodischen Systems der Elemente und einen Kautschuklatex oder die wäßrige Emulsion einer Kautschuklösung enthalten, gegebenenfalls in Gegenwart eines organischen Lösungsmittels, das dadurch gekennzeichnet ist, daß man

a) ≥50 Gew.-%, aber weniger als 100 Gew.-% der vorgesehenen Menge des feinteiligen Füllstoffs, bevorzugt in Form einer wäßrigen Suspension mit einem Gehalt von 2 bis 15 Gew.-% in Wasser, gegebenenfalls mit einer der für die Modifizierung der Füllstoffoberfläche vorgesehenen Menge einer oder mehrerer der Organosiliziumverbindungen gemäß den Formeln (I), (II) oder (III) in einer Menge von 0,1 bis 20 Gew.-%, bezogen auf den Füllstoff, insbesondere, wenn es sich um einen silikatischen Füllstoff, bevorzugt gefällte Kieselsäure handelt, und/oder ≥50 Gew.-% aber weniger als 100 Gew.-% einer zumindest zum Teil mit einer oder mehreren der Organosiliziumverbindungen (Formeln (I), (II) oder (III) an der Oberfläche modifizierten Füllstoffs, insbesondere in Gegenwart eines Emulgators mit einem Kautschuklatex oder einer wäßrigen Emulsion einer Kautschuklösung vermischt und den pH-Wert der Mischung auf einen Wert im Bereich von 7,5 bis 6,5, insbesondere durch Zusatz einer Lewis-Säure, absenkt (erste Stufe),

b) den restlichen Anteil (Splitting Anteil) der oben genannten feinteiligen Füllstoffe, gegebenenfalls zusammen mit der zur Modifizierung der Füllstoffoberfläche vorgesehenen Restmenge an Organosiliziumverbindungen der Formeln (I), (II) oder (III) in Form einer Suspension zusetzt, den pH-Wert, insbesondere durch Zusatz einer Lewis-Säure auf einen Wert im Bereich <6,5 bis ~5, bevorzugt ~5,5 absenkt, so daß der in der Mischung befindliche Kautschuk zusammen mit dem Füllstoff vollständig ausfällt (zweite Stufe),

c) den ausgefällten Feststoff mit an sich bekannten Maßnahmen abtrennt,

d) ihn gegebenenfalls wäscht und

e) trocknet.

Die Organosiliziumverbindungen werden insbesondere bei Verwendung von silikatischen Füllstoffen, bevorzugt Kieselsäuren, eingesetzt.

Das Fällverfahren wird im allgemeinen bei Raumtemperatur, insbesondere bei 20 bis 80 ° C, in dem mit bevorzugt mehreren Zugabestellen versehenden Rohr, durchgeführt.

Das Verfahren wird angepaßt an die aus der DE 198 58 706.6 bekannten Maßnahmen durchgeführt.

Bei dem erfindungsgemäß eingesetzten Verfahren handelt es sich vorzugsweise um ein Rohr mit kreisrundem Querschnitt. Der Rohrdurchmesser beträgt beispielsweise 10 bis 30 mm. Bevorzugt beträgt die Gesamtrohrlänge 1 bis 3 m, sehr bevorzugt 1,5 bis 2,5 m.

Erfindungsgemäß ist an zumindest einer Drosselstelle der Rohrquerschnitt reduziert. Vorzugsweise ist der Durchmesser des Rohres vor der Drosselstelle gleich dem Durchmesser des Rohres nach der Drosselstelle. Es liegt im Rahmen der Erfindung, daß an der Drosselstelle ein verstellbares Drosselorgan angeordnet ist. Vorzugsweise handelt es sich hierbei um ein Ventil, bevorzugt um ein Quetschventil mit einem elastischen Einsatzkörper. Nach sehr bevorzugter Ausführungsform der Erfindung wird das zumindest eine Drosselorgan mit Hilfe einer Antriebsvorrichtung eingestellt, beziehungsweise verstellt. Die erfindungsgemäße variable Querschnittsreduzierung an der Drosselstelle dient dazu, daß das kontinuierliche Verfahren stets so geführt werden kann, daß der an der Drosselstelle erzielte Druckabfall größer als 0,5 bar ist. Mit anderen Worten wird der Drosselquerschnitt mit dem verstellbaren Drosselorgan während der kontinuierlichen Verfahrensführung zweckmässigerweise stets so eingestellt, daß der Druck vor der Drosselstelle, beziehungsweise vor dem Drosselorgan um mindestens 0,5 bar höher ist als nach der Drosselstelle, beziehungsweise nach dem Drosselorgan. Es liegt im Rahmen der Erfindung, daß der mit der Drosselstelle erzielte Druckabfall in der flüssigen Mischung maximal 6 bar beträgt. Vorzugsweise wird an der Drosselstelle ein Druckabfall von 0,5 bis 3 bar, sehr bevorzugt von 0,8 bis 2,5 bar erreicht. Aufgrund der Drosselung wird eine überraschend optimale Vermischung der durch die Drosselstelle geleiteten Komponenten erzielt. Es liegt im Rahmen der Erfindung, daß sich der Rohrquerschnitt in Strömungsrichtung hinter einer erfindungsgemäßen Drosselstelle wieder erweitert.

Nach einer sehr bevorzugten Ausführungsform wird zur Beseitigung von Ablagerungen im Drosselbereich der Drosselquerschnitt während der kontinuierlichen Verfahrensführung variiert. Ablagerungen im Drosselbereich meint insbesondere Ablagerungen, beziehungsweise Wandanbackungen kurz vor der Drosselstelle und kurz nach der Drosselstelle sowie im Drosselorgan. Wenn also Ablagerungen, beziehungsweise Anbackungen im Drosselbereich festgestellt werden, wird vorzugsweise in Abhängigkeit davon der Drosselquerschnitt variiert. Zweckmässigerweise erfolgt die Regelung des Drosselquerschnittes automatisch.

Nach einer sehr bevorzugten Ausführungsform wird im Rahmen des erfindungsgemäßen Verfahrens stets ein konstanter Druckabfall an der Drosselstelle beibehalten, beziehungsweise eingestellt. Wenn sich also aufgrund von Ablagerungen, beziehungsweise Anbackungen der Druckabfall an der Drosselstele verändert, wird vorzugsweise der Drosselquerschnitt nachgeregelt, bis der erwünschte konstante Druckabfall wieder erreicht ist. Für die zur Herstellung des feinteiligen Kautschukpulvers eingesetzten Komponenten läßt sich mit der erfindungsgemäßen Drosselung also eine überraschend effektive Vermischung erreichen, so daß Endprodukte mit den gewünschten Eigenschaften problemlos herstellbar sind. Hierzu trägt auch bei, daß Ablagerungen, beziehungsweise Anbackungen, die die Strömungsverhältnisse nachteilhaft verändern würden, erfindungsgemäß auf einfache Weise verhindert werden können und somit reproduzierbare Produkte erhalten werden können.

Nach einer Ausführungsform der Erfindung wird die flüssige Mischung aus Kautschuklatex und Füllstoffsuspension vor Zugabe eines Koagulationsmittels durch ein Rohr mit einer Drosselstelle gemäß Erfindung geleitet. Bei dieser Ausführungsform findet unmittelbar nach der Drosselstelle eine effektive Vormischung von Kautschuklatex und Füllstoff statt. Nach einer anderen Ausführungsform der Erfindung wird eine flüssige Mischung aus Kautschuklatex, Füllstoff und Koagulationsmittel durch eine der oben genannten Drosselstellen geleitet. Es liegt im Rahmen der Erfindung, eine erste Drosselstelle vorzusehen, durch welche eine flüssige Mischung von Kautschukmaterial und Füllstoffsuspension geleitet wird und im Anschluß daran Koagulationsmittel zuzugeben und erst daraufhin diese flüssige Mischung durch eine zweite Drosselstelle zu leiten. Unmittelbar hinter dieser zweiten Drosselstelle findet eine effektive Mischung von Kautschukmaterial, Füllstoff und Koagulationsmittel statt. Nach bevorzugter Ausführungsform der Erfindung wird sowohl der Drosselquerschnitt der ersten Drosselstelle als auch der Drosselquerschnitt der zweiten Drosselstelle so eingestellt, daß der mit der jeweiligen Drosselstelle erzielte Druckabfall in der flüssigen Mischung größer als 0,5 bar ist und maximal 6 bar beträgt.

Nach einer sehr bevorzugten Ausführungsform, der im Rahmen der Erfindung besondere Bedeutung zukommt, werden die ausgefällten Kautschukpartikel mit einem Beschichtungsmittel beschichtet. Es liegt im Rahmen der Erfindung, daß die Zugabe des Beschichtungsmittels zu dem koagulierten Kautschukmaterial erfolgt. Zweckmässigerweise wird als Beschichtungsmittel ein Füllstoff für Kautschuk eingesetzt. Dabei kann der Füllstoff eingesetzt werden, der bereits zu Anfang des Verfahrens mit dem Kautschukmaterial gemischt wurde. Es mag sich aber auch um einen anderen Füllstoff handeln.

Nach bevorzugter Ausführungsform der Erfindung wird die flüssige Mischung mit dem zugegebenen Beschichtungsmittel durch eine zusätzliche Drosselstelle im Rohr geführt. Zweckmässigerweise beträgt auch der Druckabfall an dieser Drosselstelle mehr als 0,5 bar und maximal 6 bar, bevorzugt 3 bar.

Nach einer bevorzugten Ausführungsform der Erfindung wird die flüssige Mischung durch insgesamt drei Drosselstellen im Rohr geleitet. Bei dieser Ausführungsform werden zunächst Kautschukmaterial und Füllstoff gemischt und durch eine erste Drosselstelle geführt. In dem daran anschließenden Rohrabschnitt wird Koagulationsmittel zugefügt und die resultierende flüssige Mischung wird durch eine zweite Drosselstelle geleitet. In dem anschließenden Rohrabschnitt findet dann die Ausfällung von Kautschukpartikeln statt und daraufhin wird in diesem Rohrabschnitt Beschichtungsmittel hinzugefügt. Die Mischung mit dem Beschichtungsmittel wird dann durch eine dritte Drosselstelle geführt. Vorzugsweise beträgt der Druckabfall an jeder der drei Drosselstellen mehr als 0,5 bar. Zweckmässigerweise sind zumindest zwei, bevorzugt alle drei Drosselstellen so ausgebildet, wie es oben zu einer ersten Drosselstelle erläutert wurde.

Nach einer zweiten bevorzugten Ausführungsform sind insgesamt zwei Drosselstellen in dem Rohr vorgesehen. Bei dieser Ausführungsform werden zunächst Kautschukmaterial, Füllstoff und Koagulationsmittel gemischt und diese flüssige Mischung wird durch die erste Drosselstelle geführt. In dem an die erste Drosselstelle anschließenden Rohrabschnitt findet dann die Ausfällung der Kautschukpartikel statt und anschließend wird Beschichtungsmittel hinzugefügt. Die Mischung mit dem Beschichtungsmittel wird danach durch eine zweite Drosselstelle geleitet. Vorzugsweise wird der Drosselquerschnitt an jeder der beiden Drosselstellen mit der Maßgabe eingestellt, daß der mit der jeweiligen Drosselstelle erzielte Druckabfall in der flüssigen Mischung größer als 0,5 bar ist und maximal 6 bar beträgt.

Zweckmäßigerweise sind beide Drosselstellen so ausgebildet, wie es oben zu einer ersten Drosselstelle erläutert wurde.

Gegenstand der Erfindung ist auch eine Vorrichtung zur Durchführung des erfindungsgemäßen Verfahrens gemäß Patentanspruch 7. Mit den Patentansprüchen 8 und 9 werden bevorzugte Ausführungsformen der erfindungsgemäßen Vorrichtung beansprucht.

Der Erfindung liegt die Erkenntnis zugrunde, daß ein füllstoffhaltiges Kautschukpulver mit reproduzierbaren Eigenschaften auf wenig aufwendige Weise erhalten werden kann, wenn mit der erfindungsgemäßen kontinuierlichen Verfahrensweise gearbeitet wird. Mit den erfindungsgemäßen Drosselstellen wird eine überraschend effektive Vermischung der hier eingesetzten Komponenten (Kautschukmaterial, Füllstoff, ggf. Koagulationsmittel) erreicht, so daß im Anschluß daran die gewünschte Reaktion vollständig und problemlos abläuft. Insbesondere bei den hier in Rede stehenden Komponenten ist eine einwandfreie Vermischung in der Regel problematisch, um beispielsweise eine völlig homogene Einlagerung des Füllstoffes in den Kautschuk zu erreichen. Mit der erfindungsgemäßen variablen Drosselung wird diese Vermischung für den Fachmann überraschend effektiv und funktionssicher erzielt. Mit Hilfe der Drosselorgane, vorzugsweise Drosselventile, wird aufgrund des erfindungsgemäßen Druckabfalls eine spezielle turbulente Strömung erzeugt und dadurch eine sehr homogene Mischung erreicht, so daß auch homogene Endprodukte resultieren. Dies war bei den eingangs erläuterten bekannten Verfahren nicht möglich. Zusätzlich zu der optimalen Vermischung der Komponenten wird mit der erfindungsgemäßen Drosselung fernerhin erreicht, daß Anlagerungen, beziehungsweise Anbackungen im Bereich der Drosselstelle überraschend wirksam vermieden werden können, indem der Drosselquerschnitt verändert wird. Durch Regelung des Druckverlustes mit Hilfe variabler Drosselquerschnitte werden somit erfindungsgemäß verstopfungsunempfindliche Drosselstellen erhalten, die als optimale Mischorgane funktionieren. Mit dem erfindungsgemäßen Verfahren lassen sich pulverförmige Kautschuke herstellen, die bereits alle Kautschukhilfsstoffe enthalten können. Neben den Füllstoffen sind dies beispielsweise Schwefel, Vulkanisationsbeschleuniger, Aktivatoren sowie Kautschukalterungsschutzmittel. Diese Kautschukhilfsstoffe können während der kontinuierlichen Verfahrensführung der flüssigen Mischung problemlos zugesetzt werden und diese Kautschukhilfsstoffe liegen dann sehr homogen verteilt in den pulverförmigen Endprodukten vor. Im Gegensatz zu den bekannten Verfahren sind auch Nachbehandlungen, insbesondere die Beschichtung der Kautschukpartikel auf einfache Weise möglich, indem erfindungsgemäß ein weiteres Drosselorgan vorgesehen wird und der eingestellte Druckabfall an diesem Drosselorgan dazu beiträgt, daß auch das Beschichtungsmittel effektiv mit der flüssigen Mischung vermischt wird und somit die Kautschukpartikel funktionssicher und gleichmäßig beschichtet werden. - Mit der kontinuierlichen Verfahrensweise in dem erfindungsgemäßen Rohr werden im Vergleich zu einer diskontinuierlichen Verfahrensweise wesentlich höhere Ausbeuten pro Zeiteinheit erzielt. Die Verweilzeiten der flüssigen Mischung in dem erfindungsgemäßen Rohr sind relativ gering.

Nachfolgend wird die Erfindung anhand einer lediglich ein Ausführungsbeispiel darstellenden Zeichnung näher erläutert. Es zeigen in schematischer Darstellung:

Fig. 1    eine erste Ausführungsform einer Vorrichtung zur Durchführung des erfindungsgemäßen Verfahrens,

Fig. 2    ein Diagramm zu der Vorrichtung nach Figur 1, in dem schematisch der Druck in Abhängigkeit von der Rohrlänge, beziehungsweise von der Verweilzeit im Rohr dargestellt ist und

Fig. 3    eine zweite Ausführungsform des Gegenstandes nach Figur 1.

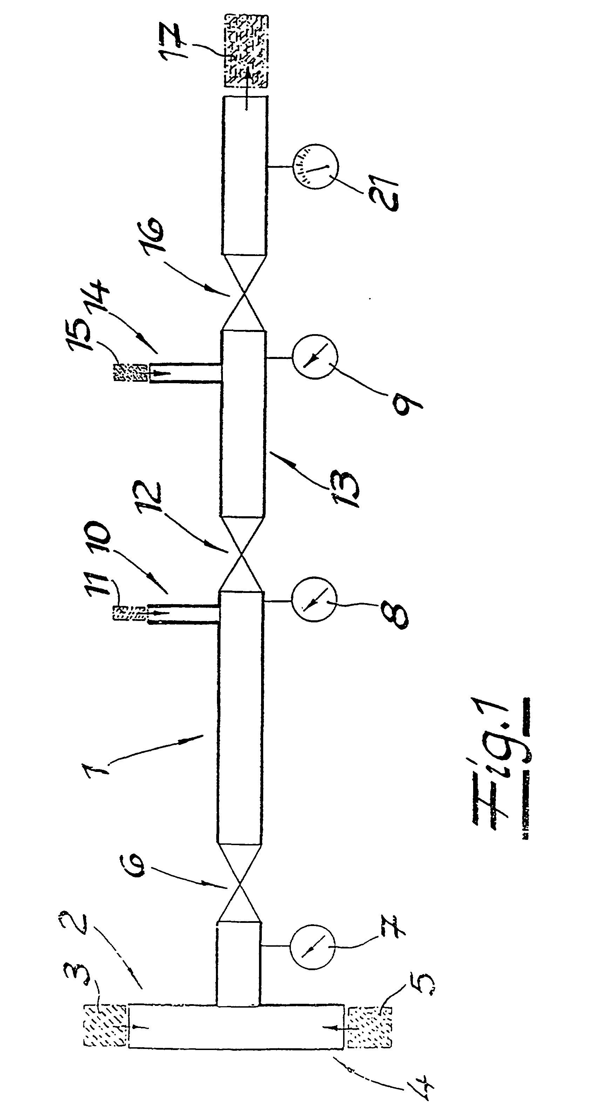

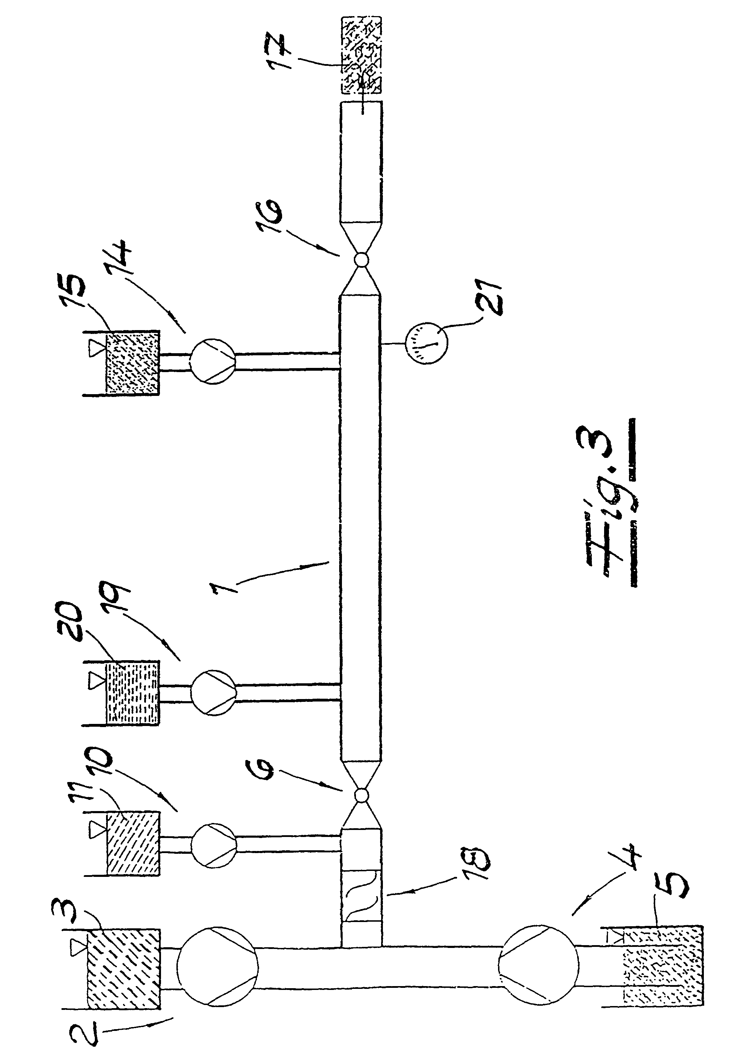

Die Figuren 1 und 3 zeigen eine Vorrichtung zur kontinuierlichen Herstellung eines füllstoffhaltigen Kautschukpulvers. Die Vorrichtung besteht aus einem Rohr 1 zum Durchleiten einer kautschukhaltigen flüssigen Mischung und zum Ausfällen von Kautschukpartikeln. Sowohl im Ausführungsbeispiel nach Figur 1 als auch im Ausführungsbeispiel nach Figur 3 ist am Anfang des Rohres 1 eine Zuführungseinrichtung 2 für Kautschukmaterial 3 und eine Zuführungseinrichtung 4 für Füllstoff 5 angeschlossen. Bei dem Kautschukmaterial mag es sich um Kautschuklatex, vorzugsweise um Styrol-Butadien-Latex handeln. Bei dem Füllstoff handelt es sich um eine wäßrige Suspension von Ruß.

Bei der Ausführungsform nach Figur 1 wird die flüssige Mischung aus Kautschukmaterial 3 und Füllstoff 5 zunächst durch das erste Drosselorgan 6 geleitet. Der Drosselquerschnitt dieses ersten Drosselorgans 6 wird stets so eingestellt, daß der an der Drosselstelle erzielte Druckabfall in der flüssigen Mischung größer als 0,5 bar ist. Es versteht sich, daß entsprechende, in den Figuren nicht dargestellte Drucksensoren vorgesehen sind. Über Druckanzeigen 7, 8, 9 können bei der Ausführungsform nach Figur 1 die in den einzelnen Rohrabschnitten jeweils vorliegenden Druckverhältnisse abgelesen werden.

Vorzugsweise wird das Verfahren so geführt, daß an dem ersten Drosselorgan 6 während der kontinuierlichen Verfahrensführung stets ein konstanter Druckabfall eingestellt bleibt. Zweckmäßigerweise wird der Drosselquerschnitt stets so nachgeregelt, daß dieser konstante Druckabfall vorliegt. Nach bevorzugter Ausführungsform erfolgt die Nachregelung des ersten Drosselorgans 6 automatisch. Das erste Drosselorgan 6 mag im Ausführungsbeispiel als Quetschventil ausgeführt sein. Vorzugsweise und im Ausführungsbeispiel nach Figur 1 hat der Rohrabschnitt vor dem ersten Drosselorgan 6 den gleichen Querschnitt wie der Rohrabschnitt nach dem ersten Drosselorgan 6. Durch die Drosselung an dem ersten Drosselorgan 6 erfolgt eine besonders effektive Vermischung des Kautschukmaterials mit dem Füllstoff.

Über eine Zuführungseinrichtung 10 wird der flüssigen Mischung in dem Rohr 1 ein Koagulationsmittel 11 zugeführt. Diese flüssige Mischung wird anschließend durch ein zweites Drosselorgan 12 geleitet, dessen Drosselquerschnitt so eingestellt wird, daß der mit der Drosselstelle erzielte Druckabfall in der flüssigen Mischung größer als 0,5 bar ist. Zweckmäßigerweise wird auch mit diesem zweiten Drosselorgan 12 der Drosselquerschnitt während des Verfahrens stets so eingestellt, daß ein konstanter Druckabfall vorliegt. Vorzugsweise wird auch dieses zweite Drosselorgan 12 automatisch in Abhängigkeit von dem gemessenen Druckabfall nachgeregelt. Vorzugsweise und im Ausführungsbeispiel entspricht der Rohrdurchmesser vor dem zweiten Drosselorgan 12 dem Rohrduchmesser nach dem zweiten Drosselorgan 12. Hinter dem zweiten Drosselorgan 12 wird das Koagulationsmittel 11 mit der flüssigen Mischung überraschend effektiv vermischt. In dem an das zweite Drosselorgan 12 anschließenden Rohrabschnitt 13 reagieren die intensiv vermischten Reaktanden dann aus und die Kautschukpartikel fallen hier aus.

Vorzugsweise und im Ausführungsbeispiel nach Figur 1 ist eine weitere Zuführungseinrichtung 14 für ein Beschichtungsmittel 15 vorgesehen. Im Ausführungsbeispiel mag das Beschichtungsmittel 15 mit dem Füllstoff 5 entsprechen. Mit diesem Beschichtungsmittel 15 sollen die zuvor ausgefällten Kautschukpartikel beschichtet werden.

Die flüssige Mischung mit dem Beschichtungsmittel 15 wird im Ausführungsbeispiel nach Figur 1 durch ein zusätzliches Drosselorgan 16 geleitet. Auch bei diesem zusätzlichen Drosselorgan 16 wird der Drosselquerschnitt mit der Maßgabe eingestellt, daß der mit der Drosselstelle erzielte Druckabfall in der flüssigen Mischung größer als 0,5 bar ist. Vorzugsweise wird auch hier stets ein konstanter Druckabfall eingestellt und wird dieser Druckabfall wie bei den vorstehend beschriebenen Drosselorganen 6, 12 bevorzugt automatisch nachgeregelt. Zweckmäßigerweise entspricht der Rohrdurchmesser vor dem zusätzlichen Drosselorgan 16 dem Rohrdurchmesser nach dem zusätzlichen Drosselorgan 16.

Hinter dem zusätzlichen Drosselorgan 16 wird das Beschichtungsmittel mit der flüssigen Mischung überraschend effektiv vermischt. In dem an das zusätzliche Drosselorgan 16 anschließenden Rohrabschnitt findet dann die Beschichtung der Kautschukpartikel statt. Das Fällungsprodukt 17 wird am Ende des Rohres in Form von beschichteten Kautschukpartikeln abgezogen werden. Anschließend erfolgt zweckmäßigerweise eine Trennung der beschichteten füllstoffhaltigen Kautschukpartikeln von der flüssigen Phase, beziehungsweise von der wäßrigen Phase und daraufhin wird vorzugsweise eine Trocknung des Kautschukpulvers durchgeführt. Es wird ein feinteiliges Kautschukpulver mit reproduzierbaren Eigenschaften erhalten.

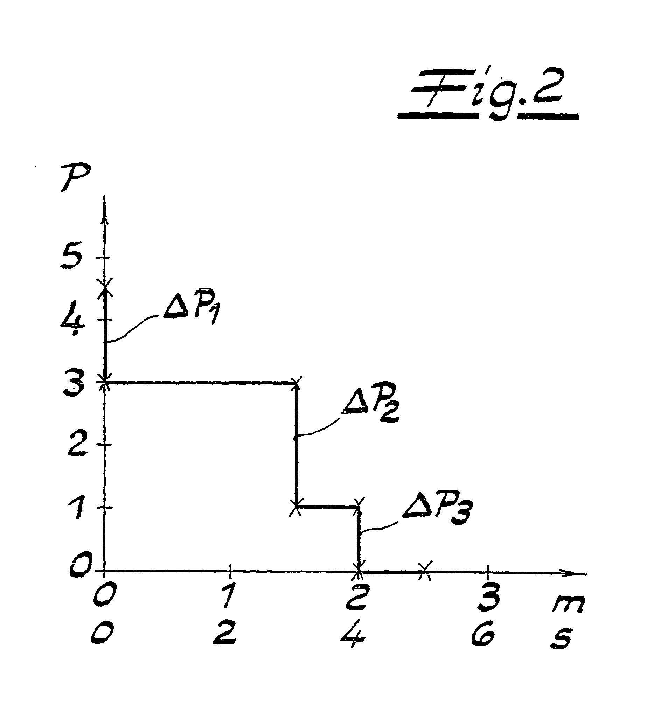

In Figur 2 ist für eine Vorrichtung gemäß Figur 1 der Druck P in dem Rohr 1 gegen die Rohrlänge (in Metern), beziehungsweise gegen die Verweilzeit der flüssigen Mischung im Rohr (in Sekunden) aufgetragen. Die Rohrlänge wird hier ab dem ersten Drosselorgan 6 gemessen. Danach wird im Ausführungsbeispiel ein Rohr mit einer Länge von 2,5 m (gemessen ab dem ersten Drosselorgan 6) eingesetzt. Der Rohrdurchmesser beträgt im Ausführungsbeispiel 25 mm. Dem Diagramm nach Figur 2 ist entnehmbar, daß der

Druckabfall $\Delta P_1$ an dem ersten Drosselorgan 6 1,5 bar beträgt. Der Druckabfall $\Delta P_2$ an dem zweiten Drosselorgan 12 beträgt im Ausführungsbeispiel 2 bar und der Druckabfall $\Delta P_3$ an dem zusätzlichen Drosselorgan 16 beträgt 1 bar.

Insgesamt ist in diesem Ausführungsbeispiel der Druck der flüssigen Mischung in dem Rohr 1 also von einem Anfangsdruck 4,5 bar auf 0 bar gesunken. Vorzugsweise beträgt der maximale Anfangsdruck 6 bar. Nach bevorzugter Ausführungsform beträgt der Druckabfall $\Delta P_1$ am ersten Drosselorgan 6 0,5 bis 2,5 bar, bevorzugt 1 bis 2 bar.

Vorzugsweise beträgt der Druckabfall $\Delta P_2$ am zweiten Drosselorgan 12 0,5 bis 3 bar, bevorzugt 1,5 bis 2,5 bar. Zweckmäßigerweise beträgt der Druckabfall $\Delta P_3$ am zusätzlichen Drosselorgan 16 0,5 bis 2 bar, bevorzugt 0,5 bis 1,5 bar.

In Figur 3 ist eine weitere Ausführungsform einer erfindungsgemäßen Vorrichtung dargestellt. Über die Zuführungseinrichtung 2 wird Kautschukmaterial 3 in Form eines 20 Gew-%igen Latex aus Styrol-Butadien-Copolymerisat zugeführt. Über die Zuführungseinrichtung 4 wird Füllstoff 5 in Form einer 3 Gew.-%igen wäßrigen Rußsuspension dem Rohr 1 zugeführt. Zur Vorvermischung des Kautschukmaterials 3 mit dem Füllstoff 5 wird die flüssige Mischung zunächst durch eine Leitblechanordnung 18 geleitet und im Anschluß daran wird dem Rohr 1 über die Zuführungseinrichtung 10 Koagulationsmittel 11 in Form einer 20 Gew.-%igen Aluminiumsulfatlösung zugeführt. Anschließend wird die flüssige Mischung mit dem Koagulationsmittel durch ein erstes Drosselorgan 6 geleitet. Der Drosselquerschnitt dieses ersten Drosselorgans 6 wird so eingestellt, daß der erzielte Druckabfall in der flüssigen Mischung größer als 0,5 bar ist. Hinter dem ersten Drosselorgan 6 findet eine sehr effektive Vermischung von Kautschukmaterial, Füllstoff und Koagulationsmittel statt. Über die Zuführungseinrichtung 19 wird Säure 20, vorzugsweise eine 10 Gew.-%ige Schwefelsäurelösung, dem Rohr 1 zugeführt.

Dabei wird ein pH-Wert zwischen 1 und 10 eingestellt. Es liegt im Rahmen der Erfindung einen pH-Wert zwischen 2,5 und 9, einzustellen. Vorzugsweise wird ein pH-Wert größer als 6 eingestellt. Mit der pH-Anzeige 21 kann der pH-Wert kontrolliert werden. Durch die pH-Wert-Einstellung kann die Größe der koagulierten, beziehungsweise gefüllten Kautschukpartikel gesteuert werden. In dem in Strömungsrichtung an die Zuführungseinrichtung 19 anschließenden Rohrabschnitt findet dann die Fällung der Kautschukpartikel statt. Über die Zuführungseinrichtung 14 wird Beschichtungsmittel 15 zugeführt. Die flüssige Mischung mit dem Beschichtungsmittel 15 wird dann durch das zusätzliche Drosselorgan 16 geleitet. Hinter dem zusätzlichen Drosselorgan 16 findet eine sehr effektive Vermischung und somit eine effektive Beschichtung der Kautschukpartikel statt. Im Anschluß daran wird das fertige Fällungsprodukt 17 in Form von in wäßriger Phase vorliegenden beschichteten feinteiligen Kautschukpartikeln abgezogen. Die Kautschukpartikel werden daraufhin von der wäßrigen Phase getrennt und das Kautschukpulver im Anschluß daran vorzugsweise getrocknet.

Im Ausführungsbeispiel nach Figur 3 beträgt die Gesamtrohrlänge 1,5 m. Der Rohrabschnitt zwischen den Zuführungseinrichtungen 2 und 4 und dem ersten Drosselorgan 6 hat eine Länge von 0,25 m. Die Länge des Rohrabschnittes zwischen dem ersten Drosselorgan 6 und dem zusätzlichen Drosselorgan 16 beträgt 1,0 m und der Rohrabschnitt im Anschluß an das zusätzliche Drosselorgan 16 hat eine Länge von 0,25 m. Der Durchmesser des Rohres 1 außerhalb der Drosselorgane 6, 16 beträgt 15 mm.

## Patentansprüche

1. Verfahren zur kontinuierlichen Herstellung von füllstoffhaltigem Kautschukpulver aus wäßrigen Füllstoffdispersionen und Kautschuklatices , **dadurch gekennzeichnet, daß** man

   a) die flüssige Mischung durch ein Rohr leitet und zumindest mit einem Koagulationsmittel versetzt,

   b) das Rohr zumindest eine Drosselstelle mit variablen Drosselquerschnitt und gegebenenfalls eine oder mehrere Einleitungsstellen enthält und

   c) der Drosselquerschnitt mit der Maßgabe eingestellt wird, daß der mit der Drosselstelle erzielte Druckabfall in der flüssigen Mischung größer als 0,5 bar ist.

2. Verfahren nach Anspruch 1, **dadurch gekennzeichnet, daß** man zur Beseitigung von Ablagerungen im Drosselbereich den Drosselquerschnitt während der kontinuierlichen Verfahrensführung variiert.

3. Verfahren nach einem oder mehreren der Ansprüche 1 oder 2, **dadurch gekennzeichnet, daß** man die flüssige Mischung aus Kautschuklatex und Füllstoff vor Zugabe eines Koagulationsmittels durch die Drosselstelle leitet.

4. Verfahren nach einem oder mehreren der Ansprüche 1 oder 2, wobei eine flüssige Mischung aus Kautschuklatex, Füllstoff und Koagulationsmittel durch die Drosselstelle geleitet wird.

5. Verfahren nach einem der Ansprüche 1 bis 4, wobei die ausgefällten Kautschukpartikel mit einem Beschichtungsmittel beschichtet werden.

6. Verfahren nach Anspruch 5, wobei die flüssige Mischung mit dem Beschichtungsmittel durch eine zusätzliche Drosselstelle im Rohr geführt wird.

7. Vorrichtung zur Durchführung des Verfahrens nach einem der Ansprüche 1 bis 6, wobei ein Rohr (1) zum Durchleiten einer kautschukhaltigen flüssigen Mischung und zum Ausfällen von Kautschukpartikeln vorgesehen ist, wobei am Anfang des Rohres (1) zumindest eine Zuführungseinrichtung (2) für Kautschukmaterial (3) sowie eine Zuführungseinrichtung (4) für Füllstoff (5) angeschlossen sind,

wobei fernerhin zumindest eine Zuführungsrichtung (10) für Koagulationsmittel (11) an das Rohr (1) angeschlossen ist
und wobei in dem Rohr (1) zumindest ein Drosselorgan (6) zur variablen Einstellung des Drosselquerschnittes vorgesehen ist.

**8.** Vorrichtung nach Anspruch 7, wobei in Strömungsrichtung hinter dem Drosselorgan (6, 12) zumindest eine Zuführungseinrichtung (14) für Beschichtungsmittel (15) an das Rohr (1) angeschlossen ist.

**9.** Vorrichtung nach Anspruch 8, wobei in Strömungsrichtung hinter der Zuführungseinrichtung (14) für Beschichtungsmittel (15) ein zusätzliches Drosselorgan (16) zur variablen Einstellung des Drosselquerschnittes vorgesehen ist.

**10.** Vorrichtung nach einem der Ansprüche 7 bis 9, wobei zumindest eine Zuführungseinrichtung (19) (Einleitungsstelle) für ein saures Medium zur pH-Wert-Einstellung in der flüssigen Mischung das Rohr angeschlossen ist.

## Claims

**1.** A process for the continuous preparation of filled rubber powder from aqueous filler dispersions and rubber latices
which comprises

a) passing the liquid mixture through a tube and treating it at least with one coagulant,

b) using a tube which has at least one constriction with variable throttle cross section and, where appropriate, which has one or more inlets, and

c) setting the throttle cross section with the proviso that the pressure drop which the constriction achieves in the liquid mixture is greater than 0.5 bar.

**2.** The process as claimed in claim 1,
wherein
the throttle cross section is varied during the continuous conduct of the process in order to eliminate deposits in the throttle region.

**3.** The process as claimed in claim 1 and/or claim 2,
wherein
the liquid mixture composed of rubber latex and filler is passed through the constriction prior to addition of a coagulant.

**4.** The process as claimed in claim 1 and/or claim 2,
where a liquid mixture composed of rubber latex, filler, and coagulant is passed through the constriction.

**5.** The process as claimed in any of claims 1 to 4, where the precipitated rubber particles are coated with a coating composition.

**6.** The process as claimed in claim 5, where the liquid mixture is conducted with the coating composition through an additional constriction in the tube.

**7.** An apparatus for carrying out the process as claimed in any of claims 1 to 6, where a tube (1) has been provided for the passage of a rubber-containing liquid mixture and for precipitation of rubber particles,
where at the start of the tube (1) at least one feed device (2) for rubber material (3), and also one feed device (4) for filler (5) have been attached,
and where at least one feed device (10) for coagulant (11) has been attached to the tube (1),
and where at least one throttle unit (6) for variable setting of the throttle cross section has been provided in the tube (1).

**8.** The apparatus as claimed in claim 7, where at least one feed device (14) for coating composition (15) has been attached to the tube (1) downstream of the throttle unit (6, 12).

**9.** The apparatus as claimed in claim 8, where an additional throttle unit (16) for variable setting of the throttle cross section has been provided downstream of the feed device (14) for coating composition (15).

**10.** The apparatus as claimed in any of claims 7 to 9, where at least one feed device (19) (inlet) for an acidic medium for pH adjustment in the liquid mixture has been attached to the tube.

## Revendications

**1.** Procédé de fabrication continue de poudre de caoutchouc renfermant des adjuvants à partir de dispersions aqueuses d'adjuvants et de latex, **caractérisé en ce que**

a) le mélange fluide est conduit dans un tube et est additionné au moins d'un produit coagulant,

b) le tube est équipé d'un étranglement de section variable et éventuellement d'un ou de plusieurs embranchements et **en ce que**

c) la section de l'étranglement peut être réglée de telle sorte que la chute de pression dans le mélange liquide obtenue avec le dispositif d'étranglement est supérieure à 0,5 bar.

2. Procédé selon la revendication 1,
**caractérisé en ce que**
pour éviter la formation de dépôts dans le dispositif d'étranglement la section de l'étranglement varie pendant le processus continu.

3. Procédé selon une ou plusieurs des revendications 1 ou 2
**caractérisé en ce que**
le mélange liquide de latex et d'adjuvant est conduit à travers cet étranglement avant l'ajout de produit coagulant.

4. Procédé selon une ou plusieurs des revendications 1 ou 2,
**caractérisé en ce que**
un mélange liquide de latex, d'adjuvant et de produit de coagulation est conduit à travers l'étranglement.

5. Procédé selon l'une des revendications 1 à 4, dans lequel les particules de caoutchouc précipitées sont revêtues avec un produit de revêtement.

6. Procédé selon la revendication 5 dans lequel le mélange liquide avec le produit de revêtement est conduit à travers un étranglement supplémentaire de la conduite.

7. Dispositif pour la réalisation du procédé selon l'une des revendications 1 à 6, dans lequel un tube (1) est prévu pour le passage d'un mélange liquide contenant du caoutchouc et pour la précipitation des particules de caoutchouc,
le début du tube (1) étant muni au moins d'un dispositif d'introduction (2) du caoutchouc (3) et d'un dispositif d'introduction (4) de l'adjuvant (5),
au moins un dispositif d'alimentation (10) en produit de coagulation (11) étant raccordé au tube (1),
le tube (1) étant également doté d'au moins un organe d'étranglement (6) pour obtenir un réglage variable de la section de l'étranglement.

8. Dispositif selon la revendication 7, dans lequel un dispositif d'alimentation (14) du produit de revêtement (15) est raccordé au tube (1) après l'organe d'étranglement (6, 12) dans le sens d'écoulement.

9. Dispositif selon la revendication 8, dans lequel un organe d'étranglement supplémentaire (16) pour un réglage variable de la section d'étranglement est prévu dans le sens d'écoulement après le dispositif d'alimentation (14) du produit de revêtement (15).

10. Dispositif selon l'une des revendications 7 à 9, dans lequel au moins un dispositif d'alimentation (19) (point d'introduction) d'un média acide est raccordé au tube pour le réglage du pH du mélange liquide.

Fig.1

Fig.2

Fig. 3